# EUROPÄISCHE PATENTSCHRIFT

(11) **EP 3 390 117 B1**
(45) Veröffentlichungstag und Bekanntmachung des Hinweises auf die Patenterteilung: **24.07.2019**
(21) Anmeldenummer: 16798663.7
(22) Anmeldetag: 10.11.2016
(51) Int. Cl.: B60C 23/04

(54) **REIFENDRUCKÜBERWACHUNGSEINHEIT**
TIRE PRESSURE MONITORING UNIT
UNITÉ DE CONTRÔLE DE LA PRESSION DES PNEUMATIQUES

(30) Priorität: 15.12.2015 DE 102015121780; 16.12.2015 DE 102015121989
(43) Veröffentlichungstag der Anmeldung: 24.10.2018
(73) Patentinhaber: HUF Hülsbeck & Fürst GmbH & Co. KG, 42551 Velbert (DE)
(72) Erfinder: GAMER, Benedikt, 75045 Walzbachtal (DE); ARNOLDO, Sven, 76316 Malsch (DE); DUSSINGER, Axel, 74906 Bad Rappenau (DE); GORENZWEIG, Igor, 42109 Wuppertal (DE)
(86) Internationale Anmeldenummer: PCT/EP2016/077233
(87) Internationale Veröffentlichungsnummer: WO 2017/102185

(56) Entgegenhaltungen:
- EP-A2- 1 319 529
- WO-A1-2016/023607
- TW-A- 201 041 759
- US-A1- 2006 021 426

## Beschreibung

Die Erfindung betrifft eine Reifendrucküberwachungseinheit (1) zur Anordnung innerhalb eines Kraftfahrzeugreifens zur Erfassung des Reifenfülldrucks aufweisend:
- ein Gehäuse, in welchem Elektronikbauteile (8, 9), insbesondere eine Leiterplatte, und zumindest ein Drucksensor (12) angeordnet sind, wobei das Gehäuse eine Gehäuseunterschale (3) und eine Gehäuseoberschale (7) umfasst,
- wobei die Gehäuseunterschale (3) oder die Gehäuseoberschale (7) mindestens ein Überstand (14) aufweist,
- einen im Gehäuse angeordneten Lufteinlass (11), über den der Drucksensor (12) mit dem Reifenfülldruck beaufschlagbar ist,
- eine Dichtung (4), welche zwischen dem Lufteinlass (11) und dem Drucksensor (12) angeordnet ist.

Derartige Reifendrucküberwachungseinheiten zur Überwachung des Reifenfülldrucks eines Kraftfahrzeuges sind aus WO2016/023607 A1, US2006/0021426 A1, EP1319529 A2 und TW201041759 A1 bekannt. Im Betrieb übermitteln diese Reifenüberwachungsdruckeinheiten einer Zentraleinheit des Kraftfahrzeuges drahtlos Informationen über den Reifenfülldruck des Kraftfahrzeugreifens. Zusammen mit der Zentraleinheit bilden die Reifendrucküberwachungseinheiten sämtlicher Reifen des Kraftfahrzeuges ein Reifendrucküberwachungssystem. Diese Reifendrucküberwachungseinheiten zur Überwachung des Reifenfülldrucks werden innerhalb des Reifens an die Felge angelehnt bzw. gedrückt.

Um die innerhalb des Gehäuses der Reifendrucküberwachungseinheit angeordneten Elektronikbauteile gegen Feuchtigkeit zu schützen, ist es bekannt, die Elektronikbauteile in eine Gehäuseunterschale der Reifendrucküberwachungseinheit einzusetzen und sodann die Gehäuseunterschale mit einer aushärtenden Vergussmasse auszugießen, sodass die Elektronikbauteile vollständig von der Vergussmasse umschlossen und durch diese geschützt werden.

Nachteilig dabei ist es jedoch, dadurch dass das Gehäuse einer solchen Reifendrucküberwachungseinheit mit einer aushärtenden Vergussmasse vollständig ausgegossen wird, dass die Reifendrucküberwachungseinheit eine große Masse aufweist, woraus bei hohen Fahrgeschwindigkeiten des Kraftfahrzeuges große Zentrifugalkräfte auftreten und rapide ansteigen, da derartige Reifendrucküberwachungseinheiten innerhalb des Kraftfahrzeugreifens an der Felge angeordnet werden. Im schlimmsten Fall können die auftretenden Zentrifugalkräfte dazu führen, dass sich die Reifendrucküberwachungseinheit von der Felge löst und beschädigt wird und ein an der Reifendrucküberwachungseinheit befestigtes Ventil sich löst und bricht.

Die Aufgabe der Erfindung ist es, eine Reifendrucküberwachungseinheit der eingangs genannten Art derart weiterzubilden, dass diese bei einer kleineren Gesamtmasse der Reifendrucküberwachungseinheit einen guten Schutz der Elektronikbauteile innerhalb des Gehäuses vor Feuchtigkeit bietet.

Diese Aufgabe wird dadurch gelöst, dass die Elektronikbauteile, insbesondere die Leiterplatte, mit mindestens einem Überstand der Gehäuseunterschale oder Gehäuseoberschale stoffschlüssig, insbesondere mittels einer Heißprägeverbindung, miteinander verbindbar sind. Vorteilhafte Weiterbildungen der Erfindung sind in den jeweiligen abhängigen Ansprüchen angegeben.

Bei dieser Anordnung wird eine zuverlässige Abdichtung des Gehäuseinnenraumes gegenüber dem Lufteinlass und damit gegenüber der Umgebung geschaffen. Dadurch sind die in dem Gehäuse angeordneten Elektronikbauteile zuverlässig gegen Feuchtigkeit geschützt. Durch die an der Gehäuseoberschale angeordnete Gehäuseunterschale wird das Gehäuse komplett fluiddicht ausgebildet, so dass es keiner Vergussmasse bedarf, um die im Gehäuse angeordnete Elektronikbauteile zu schützen.

Hieraus resultieren bei Anordnung der Reifendrucküberwachungseinheit innerhalb eines Reifens auf der Kraftfahrzeugfelge geringere Zentrifugalkräfte auch bei hohen Fahrgeschwindigkeiten des Kraftfahrzeuges. Hierdurch wird die Neigung des Sensors, sich aufgrund großer Zentrifugalkräfte und/oder auftretender Vibrationen von der Felge abzulösen vermindert. Besonders vorteilhaft ist es bei einer Kombination von Reifendrucküberwachungseinheit mit einem durch eine entsprechende Bohrung in der Felge zu führenden Ventilkörper mit dem Befüllventil, dass der Schwerpunkt der Gesamtanordnung zur Außenseite des Rades verlagert wird, wodurch die Neigung der Reifendrucküberwachungseinheit, sich von der Felge zu lösen, weiter reduziert wird.

Besonders vorteilhaft ist die Befestigung der Leiterplatte durch das Heißprägeverfahren. Die Leiterplatte wird durch die am Gehäuse angeordnete Überstände positioniert und geführt. Anschließend können die Überstände nach dem Einlegen der Leiterplatte mittels eines Werkzeuges heißgeprägt werden, so dass nach dem Heißprägen diese Materialbereiche die Elektronikbauteile übergreifende Fixierungen bilden und die Elektronikbauteile innerhalb des Gehäuses sichern. Dadurch können zusätzliche Befestigungselemente wie Schrauben entfallen, was zur Gewichtreduzierung beiträgt. Zusätzlich wird durch das Heißprägen eine sichere Verbindung erreicht. Denn eine Schraubverbindung würde sich beispielweise beim Fahrtbetrieb durch auftretende Vibrationen lösen.

Vorzugsweise liegen Elektronikbauteile formschlüssig und/oder kraftschlüssig in der Gehäuseunterschale oder in der Gehäuseoberschale ein.

Durch die Anordnung entsprechender Aufnahmebereiche innerhalb der Gehäuseunterschale oder innerhalb der Gehäuseoberschale, in welchen die Elektronikbauteile formschlüssig und/oder kraftschlüssig einliegen, wird das jeweilige Elektronikbauteil innerhalb des Gehäuses fixiert und ferner wird die Endmontage der Reifendrucküberwachungseinheit erleichtert, wenn bereits vor der Fertigmontage des Gehäuses durch Zusammenfügen von Gehäuseunterschale und Gehäuseoberschale die Elektronikbauteile in einem der beiden Bauteile des Gehäuses fixiert und hierdurch unverlierbar angeordnet sind.

Vorzugweise sind die Elektronikbauteile in der Gehäuseunterschale oder in der Gehäuseoberschale angeordnet und werden bei dem Zusammenbau des Gehäuses gegen elastische Auflagebereiche, insbesondere gegen die Dichtung, an dem Gehäusegegenstück gepresst, so dass die Elektronikbauteile bei montiertem Gehäuse unter Vorspannung der elastischen Auflagebereiche, insbesondere der Dichtung, in dem Gehäuse fixiert sind.

Durch elastische Auflagebereiche an dem Gehäusegegenstück werden zum einen Vibrationen gedämpft und hierdurch die Elektronikbauteile geschützt. Zum anderen wird durch die elastische Verformung der Auflagebereiche an dem Gehäusegegenstück das Elektronikbauteil innerhalb des Gehäuses fixiert. Vorzugsweise sind zwischen der Gehäuseunterschale und den Elektronikbauteilen oder zwischen der Gehäuseoberschale und den Elektronikbauteilen eine oder mehrere Schaumstoffeinlagen angeordnet.

Durch derartige Schaumstoffeinlagen werden die Elektronikbauteile innerhalb des Gehäuses zusätzlich gegen Vibrationen geschützt. Hierdurch wird einer Beschädigung der Elektronikbauteile durch Vibrationen zuverlässig entgegengewirkt.

Vorzugsweise wird die Gehäuseoberschale an der Gehäuseunterschale in entsprechende Aufnahmen eingerastet. Alternativ kann die Gehäuseoberschale mit der Gehäuseunterschale verschraubt sein.

Zur Montage des Gehäuses ist es somit möglich, die Gehäuseoberschale an der Gehäuseunterschale einzurasten und/oder zu verschrauben. Durch die Dichtung zwischen Gehäuseoberschale und Gehäuseunterschale ist der Gehäuseinnenraum zuverlässig gegenüber der Umgebung abgedichtet und die in dem Gehäuse angeordnete Elektronik gegen Feuchtigkeit geschützt.

In einer weiteren besonders bevorzugten Ausführungsform ist die Gehäuseoberschale mit der Gehäuseunterschale stoffschlüssig verbunden und/oder verklebt. Insbesondere können die Gehäuseoberschale und die Gehäuseunterschale miteinander laserverschweißt und/oder ultraschallverschweißt sein.

Durch ein derartiges Verschweißen und/oder Verkleben der Gehäuseoberschale mit der Gehäuseunterschale wird ebenfalls eine zuverlässige Abdichtung des Gehäuseinnenraumes gegenüber der Umgebung geschaffen.

Die Gehäuseunterschale und/oder die Gehäuseoberschale kann aus thermoplastischem Polymeren, wie beispielsweise Polybutylenterephthalat, insbesondere auch aus glasfaserverstärktem Polybutylenterephthalat, Polyamid oder Polypropylen gebildet sein.

Die Dichtung und/oder Auflagebereiche für die Elektronikbauteile kann durch einen thermoplastischen Elastomer wie beispielsweise Styrol-Blockcopolymere, insbesondere SEPS, oder beispielsweise thermoplastische Copolyamid, oder beispielsweise als Silikonmatte, gebildet sein. Besonders vorteilhaft ist, wenn die Dichtung aus Silikon hergestellt ist.

Vorzugsweise weist die Gehäuseoberschale oder die Gehäuseunterschale die Aufnahme für die Dichtung auf. Dadurch kann die die Dichtung konzentrisch im Gehäuse positioniert werden, um die Luft durch den Lufteinlass über die in der Dichtung angeordnete Öffnung zum Drucksensor durchzuleiten, der auf der Leiterplatte angeordnet ist.

Vorzugsweise weist die Dichtung mindestens einen Flügel auf. Das weist den Vorteil auf, dass die Flügel die Auflagefläche für die Leiterplatte vergrößern und somit eine stabile Lagerung der Leiterplatte gewährleistet wird.

Die innerhalb des Gehäuses angeordneten Elektronikbauteile der Reifendrucküberwachungseinheit können dabei, insbesondere eine Energiequelle wie eine Batterie, eine Mess- und Sendeelektronik zur Verarbeitung der mittels des Drucksensors erfassten Reifenfülldruckwerte sowie eine Antenne zur Funkübermittlung an eine Zentraleinheit eines Reifendrucküberwachungssystems umfassen. Mess- und Sendeelektronik können wiederum auf einer Leiterplatte angeordnet sein, die in das Gehäuse der Reifendrucküberwachungseinheit eingebaut wird.

In einer weiteren besonders bevorzugten Ausführungsform weist die Gehäuseoberschale oder die Gehäuseunterschale eine Aufnahme für die Dichtung auf. Dadurch wird die optimale Position der Dichtung in der Gehäuseoberschale oder der Gehäuseunterschale erreicht, um eine einfache Montage beim nachfolgenden Einsetzen der Leiterplatte mit darauf abgeordnetem Drucksensor zu gewährleisten, der genau über der Dichtung positioniert werden soll.

Erfindungsgemäß sind Überstände kegelförmig ausbildet. Dies weist den Vorteil auf, dass nach dem Einlegen der Leiterplatte ins Gehäuse mit dort aufgenommen Dichtung eine reibschlüssige Verbindung zwischen den Überständen und der Leiterplatte entsteht und somit eine Vorfixierung für das anschließende Heißprägeverfahren geschaffen wird. Vorzugsweise weist die Reifendrucküberwachungseinheit ein Ventilkörper mit einem Ventil zum Befüllen des Reifens auf. Insbesondere können das Gehäuse der Reifendrucküberwachungseinheit und der Ventilkörper miteinander verschraubt sein. Hierzu weist das Gehäuse der Reifendrucküberwachungseinheit vorzugsweise einen entsprechenden Montagebereich zur Befestigung eines Ventilkörpers mittels einer Verschraubung an dem Gehäuse der Reifendrucküberwachungseinheit auf. Hierdurch kann eine kompakte Baueinheit geschaffen werden, die gleichzeitig das Gehäuse mit den darin angeordneten Elektronikbauteilen und zumindest einem Drucksensor aufweist und gleichzeitig einen Ventilkörper mit einem Ventil zum Befüllen des Reifens. Der Ventilkörper wird bei der Montage der Baugruppe durch eine entsprechende Bohrung der Kraftfahrzeugfelge von innen nach außen geführt, so dass die Reifendrucküberwachungseinheit mit dem Gehäuse innerhalb des montierten Kraftfahrzeugreifens auf der Felge verbleibt.

Mehrere Ausführungsbeispiele der Erfindung sind in den Figuren dargestellt und werden nachfolgend näher erläutert. Es zeigen:
- Fig. 1a: Eine Reifendrucküberwachungseinheit gemäß einer ersten Ausführungsform;
- Fig. 1b: eine Gehäuseunterschale gemäß der ersten Ausführungsform;
- Fig. 1c: die Gehäuseunterschale mit einer eingelegten Dichtung gemäß der ersten Ausführungsform;
- Fig. 1d: die Dichtung gemäß der ersten Ausführungsform;
- Fig. 1e: die Gehäuseunterschale mit einer mittels Heissprägeverfahrens befestigten Leiterplatte gemäß der ersten Ausführungsform;
- Fig. 1f: den Schnitt A - A der Fig. 1e gemäß der ersten Ausführungsform;
- Fig. 2a: eine Reifendrucküberwachungseinheit mit geschlossenem Gehäuse gemäß einer zweiten Ausführungsform;
- Fig. 2b: die Reifendrucküberwachungseinheit ohne Gehäuseoberschale gemäß der zweiten Ausführungsform ;
- Fig. 3: den Schnitt D -D gemäß der zweiten Ausführungsform;
- Fig. 4: den Schnitt F - F gemäß der zweiten Ausführungsform;
- Fig. 5: eine Reifendrucküberwachungseinheit ohne Gehäuseoberschale gemäß einer dritten Ausführungsform.

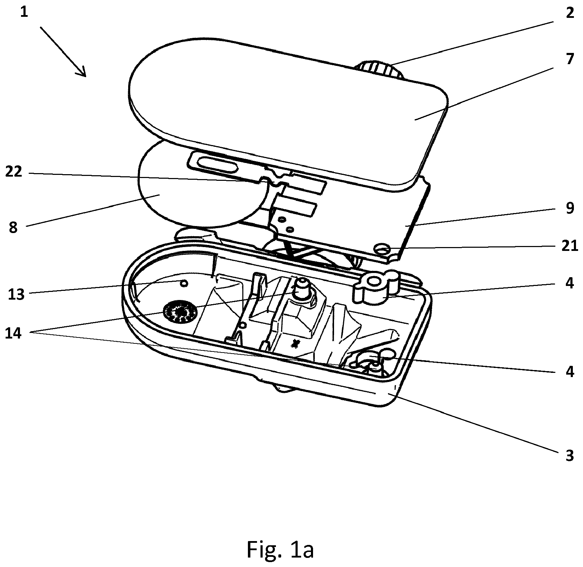

Fig. 1a zeigt eine Reifendrucküberwachungseinheit gemäß einer ersten Ausführungsform und daran anmontiertem Ventil 2. Das Ventil 2 weist an seinem äußeren Ende eine äußere Schutzkappe 15 auf. Die Gesamtanordnung wird dergestalt montiert, dass das Ventil 2 von der Innenseite nach außen durch eine Bohrung in einer Felge eines Kraftfahrzeuges gesteckt wird. Dementsprechend verbleibt nach der Montage die Reifendrucküberwachungseinheit 1 auf der Felge innerhalb des schlauchlosen Kraftfahrzeugreifens zur Überwachung des Reifenfülldrucks.

Die Reifendrucküberwachungseinheit 1 weist ein Gehäuse auf, welches eine Gehäuseoberschale 7 und eine Gehäuseunterschale 3 umfasst. Innerhalb des Gehäuses ist eine Batterie 8 angeordnet, die der Energieversorgung der Reifendrucküberwachungseinheit 1 dient. Neben der Batterie 8 ist eine Leiterplatte 9 angeordnet, auf der sich die Elektronikbauteile zur Auswertung und Weiterverarbeitung der Signale des im Gehäuse angeordneten Drucksensors befinden. Der Drucksensor 12 ist auf der Leiterplatte angeordnet. Die Batterie 8 und die Leiterplatte 9 sind mit Batteriekontakten 22 mechanisch und elektrisch miteinander verbunden. Die Batteriekontakte 22 sind derart ausgebildet, dass die thermische Ausdehnung kompensiert wird. Mindestens ein Batteriekontakt 22 weist eine u-förmige und / oder s-förmige Geometrie auf. Ferner ist auf der Leiterplatte 9 eine Antenne zur Funkübertragung der Druckdaten an eine zentrale Einheit eines Reifendrucküberwachungssystems in dem Kraftfahrzeug angeordnet. Die Gehäuseunterschale 3 weist Überstände 14 auf, auf welche die auf der Leiterplatte 9 aufsteckbar ist. Um die Leiterplatte 9 in der Gehäuseunterschale zu halten und / oder zu positionieren, weist die Leiterplatte 9 die Öffnungen 21 auf.

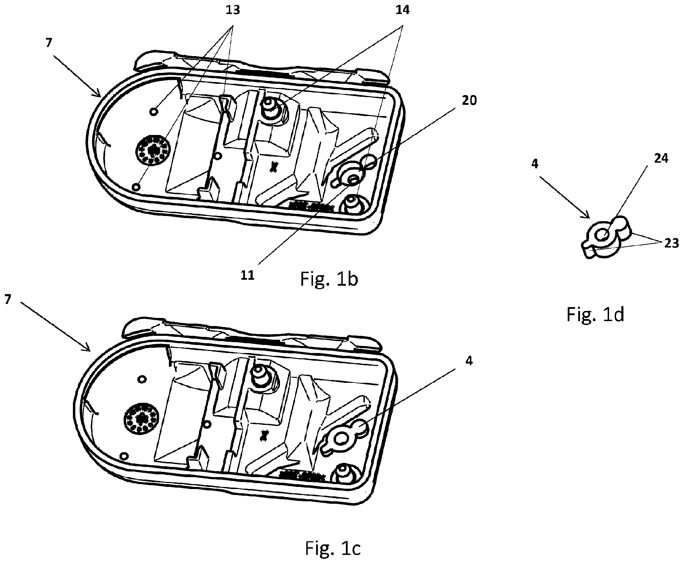

Fig. 1b zeigt eine Gehäuseunterschale ohne eingebauter Dichtung gemäß der ersten Ausführungsform. Die Gehäuseunterschale weist eine Aufnahme 20 für die Dichtung 4 auf. Des Weiteren sind auf der Gehäuseunterschale zylinderförmige oder kegelförmige Überstände 14 ausgebildet. Ferner sind Montage- und Auflagebereiche 13 für die Batterie 8 auf der Gehäuseunterschale erkennbar.

Fig. 1d zeigt die Dichtung gemäß der ersten Ausführungsform. Die Dichtung ist zylinderförmig mit einer durchgehenden Öffnung 24 ausgebildet. Zusätzlich kann die Dichtung 4 mindestens ein Flügel aufweisen, der sich radial nach außen erstreckt.

Fig. 1c zeigt die Gehäuseunterschale mit der in der Aufnahme 20 eingelegten Dichtung 4 gemäß der ersten Ausführungsform. Die Aufnahme ist mit dem Lufteinlass 11 versehen. Ferner ist in der Gehäuseunterschale 3 die Dichtung 4 angeordnet. Die Dichtung ist in der Aufnahme 4 der Gehäuseunterschale 3 angeordnet. Die Dichtung 4 befindet sich konzentrisch gegenüber dem Lufteinlass 11. Die Dichtung weist die zylindrische Form mit einer durchgehenden Öffnung 24 auf.

Nach dem Einlegen der Leiterplatte 9 in der Gehäuseunterschale 3 wird die Leiterplatte 9 mit darauf befindlichen Drucksensor 12 gegen die Dichtung 4 gedrückt. In der vorgespannten Position werden die Überstände 14 heißgeprägt.

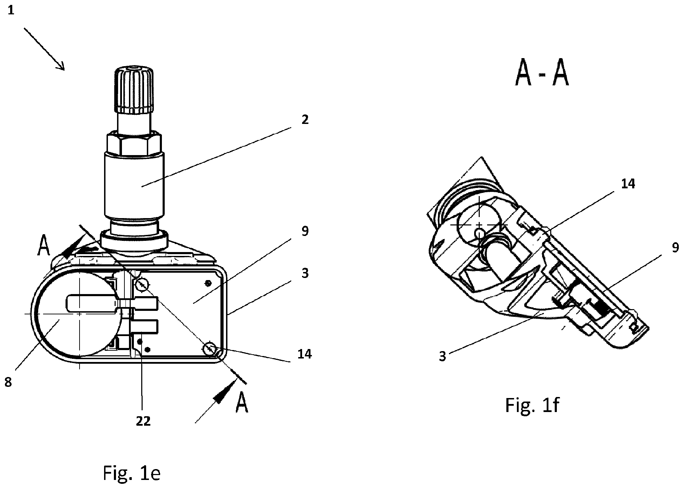

Fig. 1e zeigt die Gehäuseunterschale mit einer mittels Heissprägeverfahrens befestigten Leiterplatte gemäß der ersten Ausführungsform. Durch die plastische Verformung der Überstände 14 mittels eines Stempels entstehen pilzförmige Köpfe, die die Leiterplatte in der vorgespannten Position fixieren.

Die Verbindung der Leiterplatte 9 durch plastisch verformten Überstände 14 sind der Fig. 1f erkennbar, die den Schnitt A -A der Fig. 1e gemäß der ersten Ausführungsform zeigt.

Anschließend wird die Gehäuseoberschale 7 mit der Gehäuseunterschale 3 stoffschlüssig verbunden und/oder geklebt, insbesondere laserverschweißt und/oder ultraschallverschweißt.

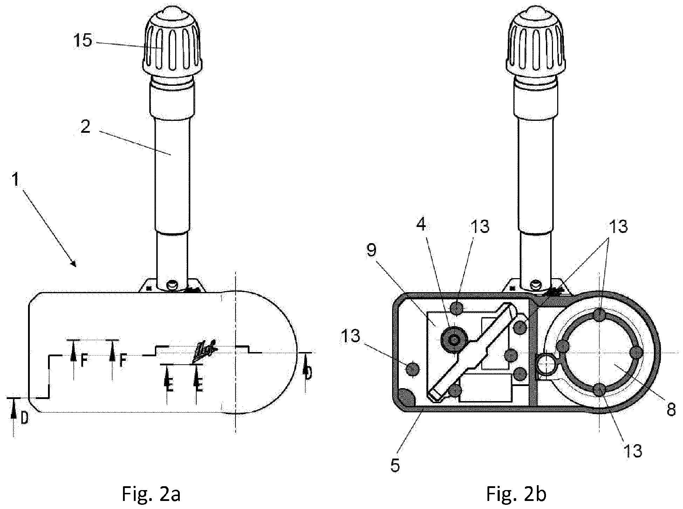

In den Figuren 2a und 2b ist eine zweite Ausführungsführung einer Reifendrucküberwachungseinheit 1 mit montiertem Ventil 2 dargestellt. Fig. 2a zeigt die vollständig montierte Reifendrucküberwachungseinheit 1 mit Ventil 2 und Schutzkappe 15 des Ventils 2. Fig. 2b zeigt die Reifendrucküberwachungseinheit 1 nach Fig. 2a ohne Gehäuseoberschale.

In der Darstellung gemäß Fig. 2b ist die Gehäuseunterschale 3 erkennbar, deren Grundkörper als Kunststoffspritzgussteils ausgebildet.

Die Dichtung 4 ist in der dafür die Dichtung vorgesehen Aufnahme mit dem Lufteinlass 11 eingelegt. Ferner ist eine in den Kontaktbereichen zwischen den beiden Gehäuseschalen 3 und 7 verlaufende Dichtung 5 angeordnet, die gleichzeitig einen Dämpfer bildet.

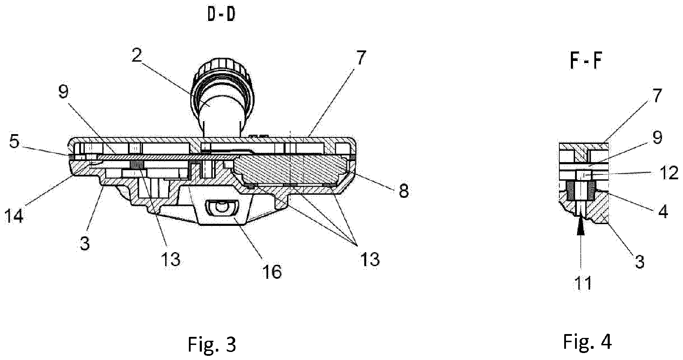

Des Weiteren sind an die Gehäuseunterschale 3 angespritzt Positionierstifte 13, die einerseits der leichteren Positionierung und Montage der Batterie 8 und der bestückten Leiterplatte 9 dienen und gleichzeitig Dämpfungselemente zum Schutz der Leiterplatte 9 und der Batterie 8 darstellen. In dem in Fig. 3 dargestellten Ausführungsbeispiel sind die Leiterplatte 9 und die Batterie 8 in Reihe positioniert.

In der vollständig montierten Form gemäß Fig. 2a sind die Gehäuseunterschale 3 und die Gehäuseoberschale 7 formschlüssig miteinander verbunden.

Der Schnitt D - D nach Fig. 2a ist in Fig. 3 dargestellt. Erkennbar ist die Anordnung der Leiterplatte 9 und der Batterie 8 in Reihe innerhalb des durch die Gehäuseunterschale 3 und die Gehäuseoberschale 7 gebildeten Gehäuses der Reifendrucküberwachungseinheit 1. Ferner sind in dem Schnitt D - D gemäß Fig. 3 erkennbar die Montage- und Auflagebereiche 13, in der Gehäuseunterschale 3 ausgebildet sind. Weiter zeigt Fig. 3 den Montagebereich 16, welcher der Aufnahme der Schraubverbindung zur Montage des Ventils 2 an der Reifendrucküberwachungseinheit 1 zur Realisierung einer Gesamteinheit aus Reifendrucküberwachungseinheit 1 mit dem Ventil 2 dient.

Die Gehäuseoberschale 7 weist angespritzte Stifte zur Aufnahme und Positionierung der Leiterplatte 9 auf. Wie in dem Schnitt D - D gemäß Fig. 3 erkennbar ist, werden nach dem Einsetzen der Leiterplatte 9 die an der Gehäuseoberschale 7 angeformten Stifte heißgeprägt, so dass diese eine die Leiterplatte 9 fixierende Hinterschneidung 14 ausbilden. Hierdurch ist die Leiterplatte 9 an der Gehäuseoberschale 7 gesichert und die Montage wird hierdurch erleichtert.

Der Schnitt F - F in Fig. 4 zeigt die Anordnung des Lufteinlasses 11, durch den der Drucksensor 12 mit dem Reifenfülldruck beaufschlagt wird. Ferner zeigt der Schnitt F - F die Dichtung 4 des Lufteinlasses 11. Ferner ist in dem Schnitt F - F gemäß Fig. 4 die Anordnung der Leiterplatte 9, welche den Sensor 12 trägt, erkennbar.

Beim zweiten Ausführungsbeispiel gemäß den Fig. 2a - 4 ist die Gehäuseunterschale 3 und die Gehäuseoberschale 7 mechanisch, insbesondere mittels Rastverbindung oder Schraubverbindung, gefügt und hierzu ein umlaufender Dichtungsbereich 5 zwischen den Gehäuseschalen 3, 7 vorgesehen ist.

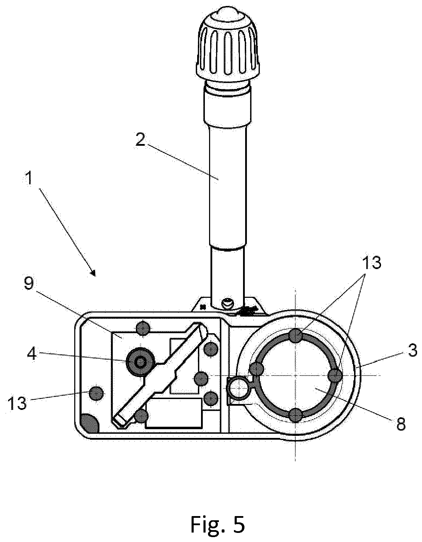

Hiervon abweichend zeigt Fig. 5 eine dritte Ausführungsform einer Reifendrucküberwachungseinheit 1, bei der die Batterie 8 und die Leiterplatte 9 in Reihe positioniert sind. Bei der Ausführungsform gemäß Fig. 5 werden die Gehäuseunterschale 3 und die Gehäuseoberschale 7 stoffschlüssig verbunden, sodass eine zwischen den Gehäuseschalen umlaufende Dichtung entfallen kann. In diesem Fall ist die Dichtung 4 zwischen dem Lufteinlass 11 dem Drucksensor 12 angeordnet, durch den der Drucksensor innerhalb des Gehäuses mit dem Reifenfülldruck beaufschlagt wird. Die Dichtung 4 ist konzentrisch gegenüber dem Lufteinlass 11 angeordnet. Ferner sind bei diesem Ausführungsbeispiel gemäß Fig. 5 Positionierstifte und Dämpfungsauflagen 13 zur Aufnahme der Batterie 8 und der Leiterplatte 9 gebildet. Durch diese elastischen Auflagen 13 wird insbesondere die Batterie 8 vor Beschädigungen durch Vibrationen geschützt. Da das Gehäuse der Ausführungsvariante gemäß Fig. 5 durch eine stoffschlüssige Verbindung, insbesondere durch Laserschweißen, von Gehäuseunterschale 3 und Gehäuseoberschale 7 gebildet wird, kann ein umlaufender Dichtungsbereich zwischen den Gehäuseschalen entfallen.

## Patentansprüche

1. Reifendrucküberwachungseinheit (1) zur Anordnung innerhalb eines Kraftfahrzeugreifens zur Erfassung des Reifenfülldrucks aufweisend:
- ein Gehäuse, in welchem Elektronikbauteile (8, 9), insbesondere eine Leiterplatte, und zumindest ein Drucksensor (12) angeordnet sind, wobei das Gehäuse eine Gehäuseunterschale (3) und eine Gehäuseoberschale (7) umfasst,
- wobei die Gehäuseunterschale (3) oder Gehäuseoberschale (7) mindestens ein Überstand (14) aufweist,
- einen im Gehäuse angeordneten Lufteinlass (11), über den der Drucksensor (12) mit dem Reifenfülldruck beaufschlagbar ist,
- eine Dichtung (4), welche zwischen dem Lufteinlass (11) und dem Drucksensor (12) angeordnet ist,
**dadurch gekennzeichnet, dass**
dass die Elektronikbauteile (8, 9), insbesondere die Leiterplatte, mit mindestens einem Überstand (14) der Gehäuseunterschale (3) oder Gehäuseoberschale (7) stoffschlüssig, insbesondere mittels einer Heißprägeverbindung, miteinander verbindbar sind, wobei die Überstände (14) kegelförmig ausbildet sind.

2. Reifendrucküberwachungseinheit (1) nach Anspruch 1, **dadurch gekennzeichnet, dass** die Elektronikbauteile (8, 9) formschlüssig und/oder kraftschlüssig in der Gehäuseunterschale (3) oder Gehäuseoberschale (7) einlegbar sind.

3. Reifendrucküberwachungseinheit (1) nach Anspruch 1 oder 2, **dadurch gekennzeichnet, dass** die Elektronikbauteile (8, 9) beim Zusammenbau des Gehäuses die Dichtung (4) an das Gehäusegegenstück gepresst werden, sodass die Elektronikbauteile (8, 9) bei montiertem Gehäuse unter Vorspannung der Dichtung (4) in dem Gehäuse fixiert sind.

4. Reifendrucküberwachungseinheit (1) nach einem der vorherigen Ansprüche, **dadurch gekennzeichnet, dass** zwischen der Gehäuseunterschale (3) und den Elektronikbauteilen (8, 9) und/oder zwischen Gehäuseoberschale (7) und den Elektronikbauteilen (8, 9) eine oder mehrere Schaumstoffeinlage/n angeordnet ist/sind.

5. Reifendrucküberwachungseinheit (1) nach einem der vorherigen Ansprüche, **dadurch gekennzeichnet, dass** die Gehäuseoberschale (7) an der Gehäuseunterschale (3) in entsprechende Aufnahmen eingerastet und/oder verschraubt ist.

6. Reifendrucküberwachungseinheit (1) nach einem der vorherigen Ansprüche, **dadurch gekennzeichnet, dass** die Gehäuseoberschale (7) mit der Gehäuseunterschale (3) stoffschlüssig verbunden und/oder verklebt ist, insbesondere laserverschweißt und/oder ultraschallverschweißt ist.

7. Reifendrucküberwachungseinheit (1) nach einem der vorherigen Ansprüche, **dadurch gekennzeichnet, dass** die Gehäuseoberschale (7) und/oder die Gehäuseunterschale (3) eine Aufnahme (20) für die Dichtung (4) aufweist.

8. Reifendrucküberwachungseinheit (1) nach einem der vorherigen Ansprüche, **dadurch gekennzeichnet, dass** die Dichtung (4) mindestens ein Flügel (23) aufweist.

## Claims

1. Tyre pressure monitoring unit (1) for placement inside a motor vehicle tyre to detect the tyre pressure, including:
- a housing, in which electronic components (8, 9), in particular a printed circuit board and at least one pressure sensor (12) are arranged, wherein the housing comprises a housing lower shell (3) and a housing upper shell (7),
- wherein the housing lower shell (3) or housing upper shell (7) has at least one protrusion (14),
- an air inlet (11) arranged in the housing via which the pressure sense (12) can be exposed to the tyre inflation pressure,
- a seal (4) which is arranged between the air inlet (11) and the pressure sensor (12),
**characterized in that**
the electronic components (8, 9), in particular the printed circuit board can be connected to each other with at least one protrusion (14) of the housing lower shell (3) or housing upper shell (7) by material bonding, in particular by means of a hot stamping connection, wherein the protrusions (14) are conical in design.

2. Tyre pressure monitoring unit (1) according to Claim 1, **characterized in that** the electronic components (8, 9) can be positioned in the housing lower shell (3) or housing upper shell (7) in positive locking or friction locking manner.

3. Tyre pressure monitoring unit (1) according to Claim 1 or 2, **characterized in that** the electronic components (8, 9) are pressed against the opposite housing element the seal (4) during assembly of the housing so that when the housing is mounted the electronic components (8, 9) are held in place in the housing by the preload of the seal (4).

4. Tyre pressure monitoring unit (1) according to any one of the preceding claims, **characterized in that** one or more foam insert(s) is/are arranged between the housing lower shell (3) and the electronic components (8, 9) and/or between the housing upper shell (7) and the electronic components (8, 9).

5. Tyre pressure monitoring unit (1) according to any one of the preceding claims, **characterized in that** the housing upper shell (7) snaps into place in corresponding mountings on the housing lower shell (3) and/or is screwed thereto.

6. Tyre pressure monitoring unit (1) according to any one of the preceding claims, **characterized in that** the housing upper shell (7) is joined to the housing lower shell (3) by material bonding and/or by adhesive bonding, in particular by laser welding and/or ultrasonic welding.

7. Tyre pressure monitoring unit (1) according to any one of the preceding claims, **characterized in that** the housing upper shell (7) and/or the housing lower shell (3) has an accommodation (20) for the seal (4).

8. Tyre pressure monitoring unit (1) according to any one of the preceding claims, **characterized in that** the seal (4) has at least one lobe (23).

## Revendications

1. Unité de contrôle de pression de pneu (1) pour montage à l'intérieur d'un pneu de véhicule automobile à des fins de saisie de la pression de gonflage du pneu comportant :
- un boîtier, dans lequel sont disposés des composants électroniques (8, 9), en particulier une carte de circuit imprimé et au moins un capteur de pression (12), sachant que le boîtier comprend une coque inférieure de boîtier (3) et une coque supérieure de boîtier (7),
- sachant que la coque inférieure de boîtier (3) ou la coque supérieure de boîtier (7) comporte au moins un élément en saillie (14),
- une arrivée d'air (11) disposée dans le boîtier, par laquelle le capteur de pression (12) peut être sollicité avec de la pression de gonflage du pneu,
- un joint d'étanchéité (4), lequel est disposé entre l'arrivée d'air (11) et le capteur de pression (12),
**caractérisée en ce que**
les composants électroniques (8,9), en particulier la carte de circuit imprimé, peuvent être reliés les uns aux autres avec au moins un élément en saillie (14) d'une coque inférieure de boîtier (3) ou d'une coque supérieure de boîtier (7) par conformité de matière, en particulier au moyen d'une liaison par estampage à chaud, sachant que les éléments en saillie (14) sont constitués en forme de cône.

2. Unité de contrôle de pression de pneu (1) selon la revendication 1, **caractérisée en ce que** les composants électroniques (8, 9) peuvent être insérés par conformité de forme et/ou de force dans la coque inférieure de boîtier (3) ou la coque supérieure de boîtier (7).

3. Unité de contrôle de pression de pneu (1) selon la revendication 1 ou 2, **caractérisée en ce que** les composants électroniques (8, 9) sont comprimés lors de l'assemblage du boîtier le joint d'étanchéité (4) sur la contre-pièce de boîtier de telle manière que les composants électroniques (8, 9) sont fixés dans le boîtier une fois le boîtier monté sous l'effet de précontrainte du joint d'étanchéité (4).

4. Unité de contrôle de pression de pneu (1) selon l'une quelconque des revendications précédentes, **caractérisée en ce qu'**une ou plusieurs garniture(s) de mousse est/sont disposée(s) entre la coque inférieure de boîtier (3) et les composants électroniques (8, 9) et/ou entre la coque supérieure de boîtier (7) et les composants électroniques (8, 9).

5. Unité de contrôle de pression de pneu (1) selon l'une quelconque des revendications précédentes, **caractérisée en ce que** la coque supérieure (7) de boîtier est enclenchée et/ou vissée à la coque inférieure de boîtier (3) dans des logements correspondants.

6. Unité de contrôle de pression de pneu (1) selon l'une quelconque des revendications précédentes, **caractérisée en ce que** la coque supérieure de boîtier (7) est reliée et/ou collée à la coque inférieure de boîtier (3) par conformité de matière, en particulier par soudage au laser et/ou soudage aux ultrasons.

7. Unité de contrôle de pression de pneu (1) selon l'une quelconque des revendications précédentes, **caractérisée en ce que** la coque supérieure de boîtier (7) et/ou la coque inférieure de boîtier (3) comporte un logement (20) pour le joint d'étanchéité (4).

8. Unité de contrôle de pression de pneu (1) selon l'une quelconque des revendications précédentes, **caractérisée en ce que** le joint d'étanchéité (4) comporte au moins une ailette (23).
